# EUROPEAN PATENT SPECIFICATION

(11) **EP 2 894 320 B1**
(45) Date of publication and mention of the grant of the patent: **07.02.2018**
(21) Application number: 14196757.0
(22) Date of filing: 08.12.2014
(51) Int. Cl.: F02D 41/14, F02D 41/18, F02D 41/00

(54) **An apparatus for detecting unstable combustion in an internal combustion engine**
Vorrichtung zum Ermitteln instabiler Verbrennung in einer Brennkraftmaschine
Dispositif de détection de combustion instable dans un moteur à combustion interne

(30) Priority: 06.01.2014 JP 2014000280
(43) Date of publication of application: 15.07.2015
(73) Proprietor: Yamaha Hatsudoki Kabushiki Kaisha, Iwata-shi, Shizuoka 438-8501 (JP)
(72) Inventor: Wachi, Akiyoshi, Iwata-shi, Shizuoka 438-8501 (JP); Nishigaki, Masato, Iwata-shi, Shizuoka 438-8501 (JP)
(74) Representative: Grünecker Patent- und Rechtsanwälte PartG mbB

(56) References cited:
- EP-A1- 1 617 061
- DE-B3- 10 346 734
- US-A- 6 082 334
- US-A1- 2002 014 103

## Description

This invention relates to a saddle riding type vehicle which is driven by a rider straddling the vehicle, and more particularly to a technique for detecting combustion in the engine having become unstable.

Environmental measures are required of saddle riding type vehicles such as two-wheeled motor vehicles which are powered by engines. Specific examples of such measures include improvement in exhaust gas purification performance and improvement in fuel efficiency. In such measures, it is important to determine the stability of combustion. That is, when combustion becomes unstable, unburned gas will be discharged as tail pipe emission, which affects both exhaust gas purification performance and fuel consumption. Therefore, by detecting with high accuracy that combustion has become unstable, control for stabilizing the combustion can be performed with high accuracy, which leads to an improvement in emission gas purification performance and an improvement in fuel efficiency.

A factor that worsens emission gas purification performance is misfire, for example. A two-wheeled motor vehicle (first apparatus) that takes an environmental measure for preventing this misfire has a crank pulse sensor and a misfire detector, for example (see Japanese Unexamined Patent Publication No. 2006-183502, for example). The crank pulse sensor detects engine rotating speeds. The misfire detector calculates an engine rotating speed based on time intervals of a crank pulse outputted from the crank pulse sensor, and detects a misfire based on a difference between rotating speeds at two predetermined crank angles.

With the first apparatus constructed in this way, when the difference between engine rotating speeds exceeds a predetermined threshold value, the misfire detector determines that a misfire has occurred and restricts engine operation.

Incidentally, a two-wheeled motor vehicle which carries a catalyst, in order to cause an early activation of the catalyst, carries out controls to increase an air intake volume and to retard ignition timing. In such controls, when combustion becomes unstable by factors such as product variations and misfires, controls are required to stabilize the combustion by reducing the increase in air intake volume, and advancing ignition timing.

As an example of such controls, although not a saddle riding type vehicle, an automobile has a rotating speed sensor, a crank angle sensor, and an operating state discriminating device (see Japanese patent No. 4742433, for example). The rotating speed sensor detects engine rotating speeds. The crank angle sensor detects angles of an output shaft. The operating state discriminating device discriminates an engine operating state based on output signals from the rotating speed sensor and the crank angle sensor.

With a second apparatus constructed in this way, when rotating speed variations of the output shaft are larger than a predetermined value, the operating state discriminating device determines that combustion characteristics have worsened, and prevents the worsening of combustion characteristics by carrying out controls such as for stopping feedback control of the air intake volume.

US2002/0014103 A discloses an intake air oxygen concentration sensor calibration device provided with an oxygen concentration sensor that detects a concentration of oxygen contained in intake air, intake passageway pressure detection means, stable condition determination means that determines whether the intake passageway pressure is in a stable condition based on the amplitude of fluctuations in intake pas-sageway pressure and a predetermined stable condition criterion value, calibration coefficient calculation means that calculates a calibration coefficient based on the in-take passageway pressure and a reference output value of the oxygen concentration sensor, and calibration means that calibrates the output of the oxygen concentration sensor based on the calibration coefficient, wherein and the stable condition criterion value is set so that the smaller the intake passageway pressure detected,; the smaller the value, and the greater the intake passageway pressure detected, the greater the value, and the calibration coefficient calculation means updates the calibration coefficient when the intake passageway pressure is stable.

This invention has been made having regard to the state of the art noted above, and its object is to provide a saddle riding type vehicle incorporating a technique devised for detecting combustion instability, thereby to be able to detect, with higher accuracy than in the prior art, that engine combustion has become unstable.

According to the present invention said object is solved by a saddle riding type vehicle having the features of independent claim 1. Preferred embodiments are laid down in the dependent claims.
To fulfill the above object, this invention provides the following construction.

A saddle riding type vehicle driven by a straddling rider, according to this inven-tion, comprises an engine having a combustion chamber; an inlet pipe for introducing a fuel-air mixture into the combustion chamber; an air throttle valve attached to the inlet pipe for adjusting quantity of the fuel-air mixture supplied to the combustion chamber; an inlet pipe pressure detector for detecting, as inlet pipe pressure, a manifold air pressure in the inlet pipe downstream of the air throttle valve; and a determiner for determining that combustion in the engine has become unstable based on variations in the inlet pipe pressure.

According to this teaching, combustion instability occurring in the combustion chamber of the engine produces a phenomenon that a negative inlet pressure in a region of the inlet pipe downstream of the air throttle valve rises to approach atmospheric pressure. Therefore, based on variations in the inlet pipe pressure detected by the inlet pipe pressure detector, the determiner can determine with high accuracy that combustion in the engine has become unstable.

According to an embodiment of the present teaching, it is preferred that the inlet pipe pressure detector is attached to the inlet pipe between the air throttle valve and the combustion chamber.

The inlet pipe pressure detector attached between the air throttle valve and the combustion chamber can detect variations in the inlet pipe pressure adjacent the combustion chamber with high accuracy.

According to a further embodiment of the present teaching, it is preferred that the air throttle valve is disposed above the engine.

The air throttle valve disposed above the engine can shorten its distance to the combustion chamber. Consequently, the volume serving as an object for measuring the inlet pipe pressure becomes small, which results in high variation sensitivity of the inlet pipe pressure by combustion instability, thereby to be able to detect combustion instability with high accuracy.

According to a further embodiment of the present teaching, it is preferred that the air throttle valve is disposed forward of a rear end of the engine when seen from a side.

With the air throttle valve disposed forward of the rear end of the engine when seen from a side, the engine can have a limited overall length and can be made compact.

According to a further embodiment of the present teaching, it is preferred that the air throttle valve is disposed between a front end and a rear end of the engine when seen from a side.

With the air throttle valve disposed between the front end and rear end of the engine when seen from a side, the engine can have a limited overall length and can be made compact.

According to a further embodiment of the present teaching, it is preferred that the inlet pipe has a volume between the air throttle valve and an inlet valve of the combustion chamber, which volume is smaller than a displacement of the engine.

Since the inlet valve has a volume from the air throttle valve to the inlet valve of the combustion chamber which is smaller than the displacement of the engine, the volume serving as an object for measuring the inlet pipe pressure becomes small. This results in high variation sensitivity of the inlet pipe pressure by combustion instability, thereby to be able to detect combustion instability with high accuracy.

According to a further embodiment of the present teaching, it is preferred that the engine includes a cylinder inclined forward, and the air throttle valve is disposed rearward of the cylinder and above a crank case of the engine.

Since the engine includes a cylinder inclined forward, and the air throttle valve is disposed rearward of the cylinder and above a crank case of the engine, the engine can be made compact.

According to a further embodiment of the present teaching, it is preferred that the engine includes a plurality of cylinders, the inlet pipe is provided for each of the cylinders; and each inlet pipe has a volume between the air throttle valve and the inlet valve of the combustion chamber, which volume is smaller than the displacement of the engine.

Since the engine includes a plurality of cylinders, the inlet pipe is provided for each cylinder, and the air throttle valve is provided for each inlet pipe, the volume serving as an object for measuring the inlet pipe pressure becomes small. This results in high variation sensitivity of the inlet pipe pressure by combustion instability, thereby to be able to detect combustion instability with high accuracy.

According to a further embodiment of the present teaching, it is preferred that the engine includes one cylinder, the inlet pipe is provided for the cylinder, and the inlet pipe has a volume between the air throttle valve and the inlet valve of the combustion chamber, which volume is smaller than the displacement of the engine.

Since the engine includes one cylinder, the inlet pipe is provided for the cylinder, and the air throttle valve is provided for the inlet pipe, the volume serving as an object for measuring the inlet pipe pressure becomes small. This results in high variation sensitivity of the inlet pipe pressure by combustion instability, thereby to be able to detect combustion instability with high accuracy.

According to a further embodiment of the present teaching, it is preferred that the vehicle comprises measurement pipes each having one end thereof connected to each inlet pipe and the other end connected to a collector, wherein the inlet pipe pressure detector is attached to the collector of the measurement pipes.

Since the inlet pipe pressure detector is attached to the collector of the measurement pipes each having one end thereof connected to each inlet pipe and the other end connected to the collector, the inlet pipe pressure can be measured with the one inlet pipe pressure detector. This can hold down cost.

According to a further embodiment of the present teaching, it is preferred that the engine includes an exhaust pipe for discharging exhaust gas from the combustion chamber, the exhaust pipe having a catalyst for purifying the exhaust gas, and a controller is provided for carrying out early activation control to cause an early activation of the catalyst, and when the determiner determines combustion instability, for inhibiting or discontinuing the early activation control.

When the engine has a catalyst in the exhaust pipe, the controller carries out early activation control for causing the catalyst to start purification action in a short time. When the determiner determines an occurrence of combustion instability at this time, the controller can inhibit or stop the early activation control, and start stabilization of the combustion. Inhibiting the early activation control of the catalyst is not completely stopping the temperature increase action of exhaust gas for early activation, but is lowering this action.

According to a further embodiment of the present teaching, it is preferred that the controller is arranged to start the early activation control by increasing an air volume introduced from the inlet pipe or by increasing an amount of retardation of ignition timing in the combustion chamber.

When the controller increases the air volume introduced from the inlet pipe, ignition timing will be retarded, and the quantity of fuel is increased to raise the temperature of exhaust gas. When the controller increases the amount of retardation of ignition timing, air volume will be increased and the quantity of fuel will be increased to raise the temperature of exhaust gas. Either technique can start the early activation control.

### BRIEF DESCRIPTION OF THE DRAWINGS

For the purpose of illustrating the invention, there are shown in the drawings several forms which are presently preferred, it being understood, however, that the invention is not limited to the precise arrangement and instrumentalities shown.
Fig. 1 is a side view showing an entire construction of a two-wheeled motor vehicle according to Embodiment 1;
Fig. 2 is a view in vertical section of an engine of the two-wheeled motor vehicle according to Embodiment 1;
Fig. 3 is a plan view of the engine of the two-wheeled motor vehicle according to Embodiment 1;
Fig. 4 is a view showing a crank angle detector of the two-wheeled motor vehicle according to Embodiment 1;
Fig. 5 is a block diagram including an ECU of the two-wheeled motor vehicle according to Embodiment 1;
Fig. 6 is a graph showing an example of variation in inlet pipe pressure at a normal time;
Fig. 7 is a graph showing an example of variation in inlet pipe pressure at a time of misfire;
Fig. 8 is a graph with a change in a time axis in the graph of Fig. 7;
Fig. 9 is a side view showing an entire construction of a two-wheeled motor vehicle according to Embodiment 2;
Fig. 10 is a left side view of a portion including an engine of the two-wheeled motor vehicle according to Embodiment 2;
Fig. 11 is a side view showing an entire construction of a two-wheeled motor vehicle according to Embodiment 3; and
Fig. 12 is a left side view of a portion of an engine of the two-wheeled motor vehicle according to Embodiment 3.

### DESCRIPTION OF THE PREFERRED EMBODIMENTS

Preferred embodiments of this invention will be described in detail hereinafter with reference to the drawings.

Embodiments of the saddle riding type vehicle in this invention will be described below taking two-wheeled motor vehicles for example.

### <Embodiment 1>

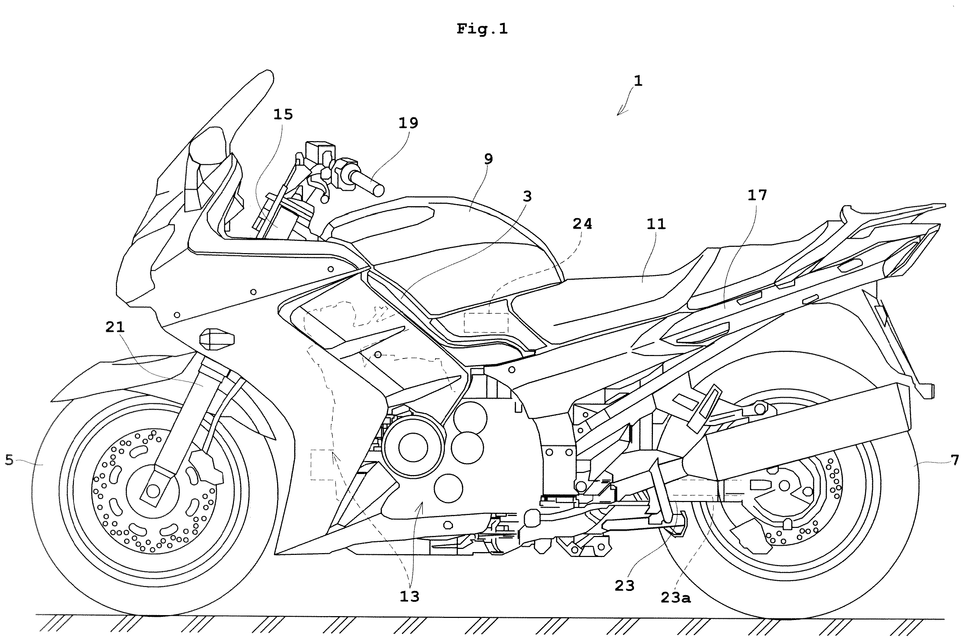

Fig. 1 is a side view showing an entire construction of a two-wheeled motor vehicle according to Embodiment 1.

A two-wheeled motor vehicle 1 in this embodiment includes a main frame 3, a front wheel 5, a rear wheel 7, a fuel tank 9, a seat 11 and an engine 13. The main frame 3 forms a framework of the two-wheeled motor vehicle 1, and has a head tube 15 disposed forward and a rear frame 17 disposed rearward. The head tube 15 has a steering handle 19. The steering handle 19 includes a front fork 21 attached to be rotatable about an axis of the head tube 15. The front fork 21 has the front wheel 5 rotatably attached to lower ends thereof. The seat 11 is mounted on an upper part of the main frame 3 and an upper part of the rear frame 17 extending rearward of the main frame 3. The fuel tank 9 is mounted on the upper part of the main frame 3, rearward of the steering handle 19 and forward of the seat 11. The main frame 3 carries the engine 13 in a lower part thereof. Rearward of the main frame 3 and the engine 13, a rear arm 23 is swingably attached at one end thereof to the main frame 3. The rear wheel 7 is rotatably attached to the other end of the rear arm 23. Drive of the engine 13 is transmitted to the rear wheel 7 by a transmission mechanism 23a arranged along the rear arm 23. An engine control unit 24 (hereinafter called ECU) for controlling the engine 13 is mounted on the upper part of the main frame 3 below the fuel tank 9.

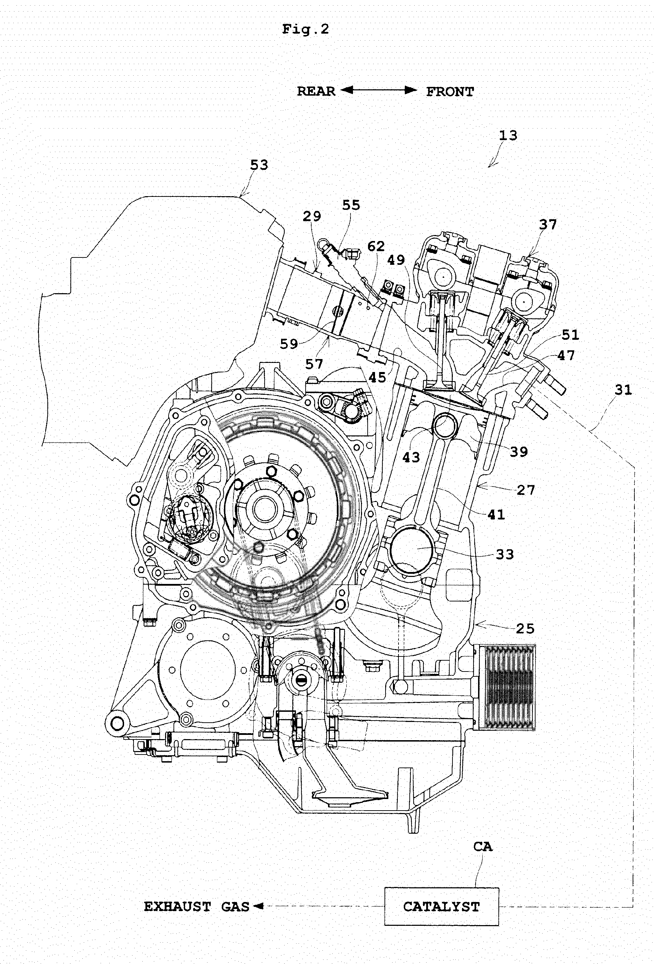

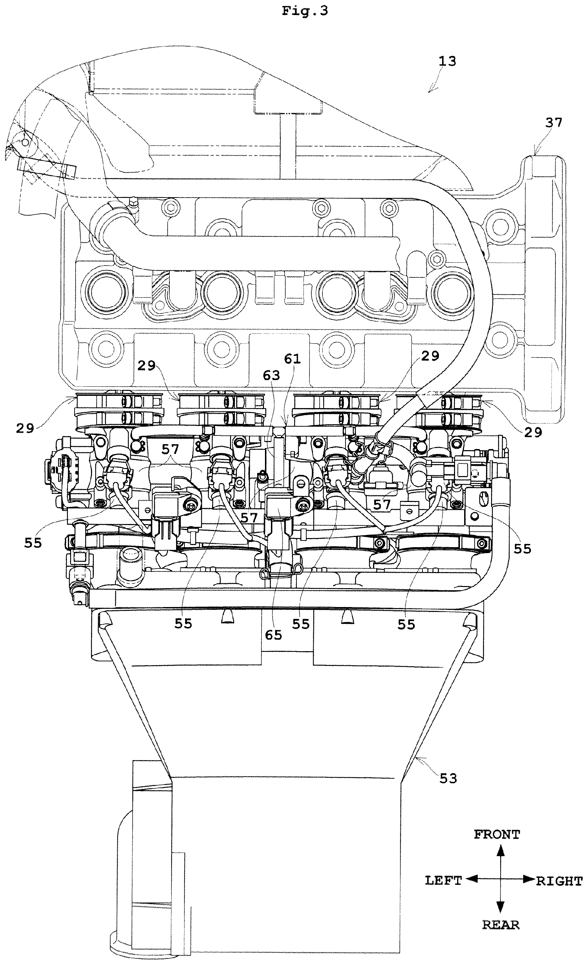

The engine 13 will now be described with reference to Figs. 2 and 3. Fig. 2 is a view in vertical section of the engine of the two-wheeled motor vehicle according to Embodiment 1. Fig. 3 is a plan view of the engine of the two-wheeled motor vehicle according to Embodiment 1. In Fig. 2, the rightward direction (direction of cylinder head 37) corresponds to the forward direction of the two-wheeled motor vehicle 1. In Fig. 3, the upward direction (direction of cylinder head 37) corresponds to the forward direction of the two-wheeled motor vehicle 1.

The engine 13 according to this embodiment is an in-line 4-cylinder engine. The engine 13 has a crankcase 25, cylinders 27, inlet pipes 29 and exhaust pipes 31. The crankcase 25 supports a crankshaft 33, and has the cylinders 27 and cylinder head 37 attached to an upper part thereof. Each cylinder 27 has a linearly reciprocable piston 39 mounted therein. The piston 39 is connected to the crankshaft 33 by a con rod 41, whereby the linear reciprocation of the piston 39 is converted into a rotational motion of the crankshaft 33. The cylinders 27 are arranged in a position inclined forward (rightward in Fig. 2) relative to the crankcase 25. The cylinder head 37 forms combustion chambers 43 in combination with the cylinders 27 and pistons 39. The cylinder head 37 has inlet ports 45 and exhaust ports 47 communicating with the combustion chambers 43. The inlet ports 45 have inlet valves 49 mounted therein for opening and closing the combustion chambers 43. The exhaust ports 47 have exhaust valves 51 mounted therein for opening and closing the combustion chambers 43. The exhaust pipes 31 communicating with the exhaust ports 47 has a catalyst CA in a location remote from the exhaust ports 47. The catalyst CA purifies, by chemical reaction, exhaust gas discharged from the combustion chambers 43 through the exhaust ports 47 into the exhaust pipes 31.

One end of each inlet pipe 29 is connected to the inlet port 45. Each inlet pipe 29 is connected at the other end thereof to an air cleaner 53. The inlet ports 45 draw in air through the air cleaner 53. A fuel injector 55 is attached to each inlet pipe 29. The fuel injector 55 injects fuel based on an injection signal calculated by and sent from the ECU 24. A throttle 57 is attached to each inlet pipe 29 upstream of the fuel injector 55. The throttle 57 has a throttle valve 59 (air throttle valve) mounted in the inlet pipe 29 for adjusting an intake airflow.

The throttle 57 is disposed above the engine 13, and when the engine 13 is seen from a side, is disposed rearward of the cylinder 27 (leftward in Fig. 2) and above the crankcase 25. When the engine 13 is seen from the side, the throttle 57 is disposed forward of the rear end of the engine 13. Since the throttle 57 is disposed in such a position, its distance to the combustion chamber 43 can be shortened. Consequently, the volume serving as an object for measuring inlet pipe pressure becomes small, which results in high sensitivity to variations in the inlet pipe pressure due to combustion instability, thereby providing a high response until combustion instability becomes detectable.

The throttle 57 may have a construction with a manifold air pressure sensor 65 integrated with the throttle valve 59.

As shown in Fig. 3, the engine 13 has measurement pipes 61. Each measurement pipe 61 has one end thereof connected to one of the inlet pipes 29 by openings 62, and the other end connected to one collector 63. The one end of the measurement pipe 61 is connected to the inlet pipe 29 between the throttle 57 and the combustion chamber 43. The collector 63 has one manifold air pressure sensor 65 attached thereto for detecting pressure. This manifold air pressure sensor 65 detects, as inlet pipe pressure, a manifold air pressure in each inlet pipe 29 between the throttle valve 59 and the inlet valves 49. The inlet pipe pressure measured by the manifold air pressure sensor 65 is outputted to the ECU 24. The manifold air pressure sensor 65 is attached through the measurement pipes 61 to each inlet pipe 29 between the throttle 57 and the combustion chamber 43, thereby to attain compactness.

The above manifold air pressure sensor 65 corresponds to the "inlet pipe pressure detector" in this invention.

The engine 13 of the two-wheeled motor vehicle 1 in this embodiment is a 4-cylinder engine with a displacement of about 1300cc. A sum total of volumes from the throttle valves 59 of the throttles 57 to the inlet valves 49 of the respective cylinders is about 400cc - 600cc. That is, the volume of the inlet pipe corresponding to each cylinder from the throttle valve 59 of the throttle 57 to the inlet valves 49 is smaller than the displacement per cylinder of the engine 13.

How to figure out the displacement of engine 13 and the volume of inlet pipes 29 is based on the following concept. Where the engine 13 has a multicylinder construction with the throttle valve 59 provided for each cylinder, the volume from throttle valve 59 to inlet valves 49 is determined. Where the engine 13 has a multicylinder construction with only one throttle valve 59 and with the inlet pipe 29 branched, a volume in the common portion of the inlet pipe 29 is divided by the number of cylinders, a volume of a portion downstream of the branching point of the inlet pipe 29 is determined for each cylinder. However, where the engine 13 has multiple cylinders, a total displacement and a total inlet pipe volume may be compared, or a displacement per cylinder and an inlet pipe volume per cylinder may be compared.

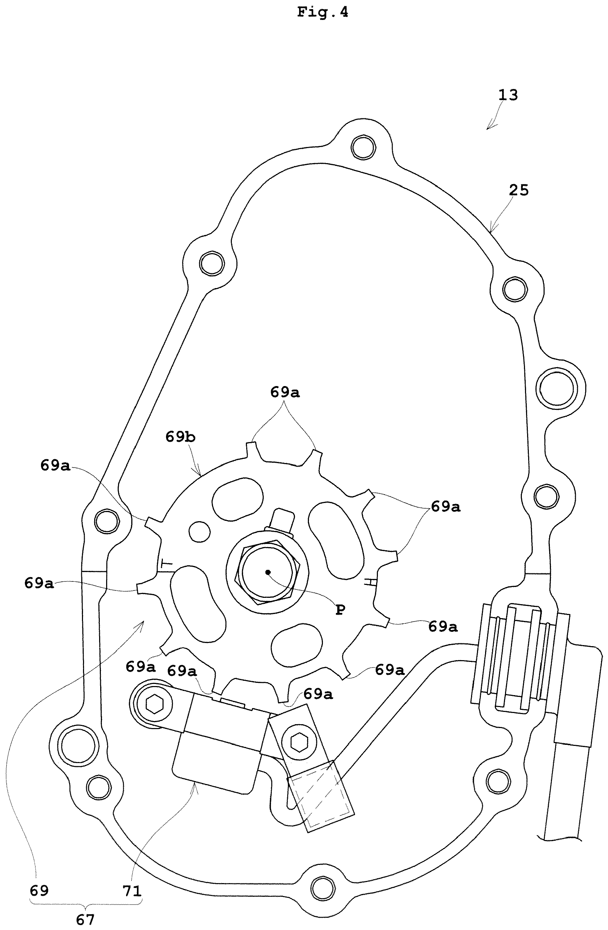

Next, reference is made to Fig. 4. Fig. 4 is a view showing a crank angle detector of the two-wheeled motor vehicle according to Embodiment 1.

The crankcase 25 has a crank angle detector 67 disposed in a rightward interior region thereof. The crank angle detector 67 includes a signal rotor 69 and a sensor 71. The signal rotor 69 is attached to the crankcase 25 to be rotatable about an axis of rotation P with rotation of the crankshaft 33. The signal rotor 69 has a disk-shaped outward appearance with teeth 69a projecting from the outer peripheral surface thereof. The signal rotor 69 in this example has a total of eleven teeth 69a. The teeth 69a are formed at intervals of 30° about the axis of rotation P of the signal rotor 69. However, no twelfth tooth 69a is formed in a position 30° from the eleventh tooth 69a. This location serves as a toothless portion 69b. By detecting the toothless portion 69b, the timing of the pistons 39 at the top dead center can be determined accurately.

The sensor 71 is formed of a pickup coil, for example. When the signal rotor 69 rotates, the distance between each tooth 69a and the sensor 71 will change. As a result, a pulsed signal is outputted from the sensor 71 for every tooth 69a but the toothless portion 69b. This signal is a crank angle signal.

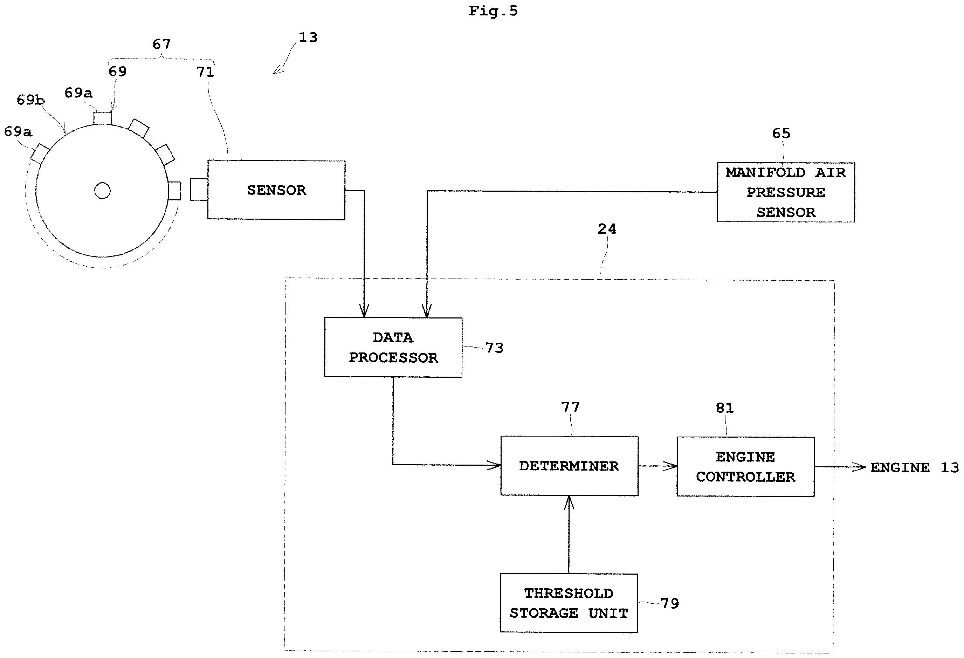

Next, reference is made to Fig. 5. Fig. 5 is a block diagram including the ECU of the two-wheeled motor vehicle according to Embodiment 1.

The ECU 24 includes a data processor 73, a determiner 77, a threshold storage unit 79 and an engine controller 81. The data processor 73 receives the crank angle signal outputted from the sensor 71 of the crank angle detector 67 and the inlet pipe pressure signal outputted from the manifold air pressure sensor 65, and correlates the crank angle and the inlet pipe pressure.

The threshold storage unit 79 stores a threshold value inputted beforehand for determining that combustion of the engine 13 has become unstable. The determiner 77, based on a process value of the inlet pipe pressure outputted from the data processor 73 and the threshold value from the threshold storage unit 79, determines whether combustion of the engine 13 has become unstable or not. The determiner 77, when it determines that combustion has become unstable, causes the engine controller 81 to carry out control to stabilize the combustion. The engine controller 81 controls the engine 13 in response to a throttle opening signal received from a throttle opening sensor (not shown) and a rotating speed signal of the engine 13 received from a rotating speed sensor (not shown), and carries out the control to stabilize the combustion in the engine 13 upon the instruction from the determiner 77.

The engine controller 81, besides the control to stabilize the combustion, carries out control of the engine 1 3 at the time of normal operation, and early activation control of the catalyst CA at the time of starting the engine 13. The control for early activation of the catalyst CA, for example, delays the timing of ignition in the combustion chambers 43, and increases the air volume introduced from the inlet pipes 29. By increasing the air volume in this way, an amount of retardation of ignition timing increases, the quantity of fuel is increased and the temperature of exhaust gas is raised, thereby to activate the catalyst CA.

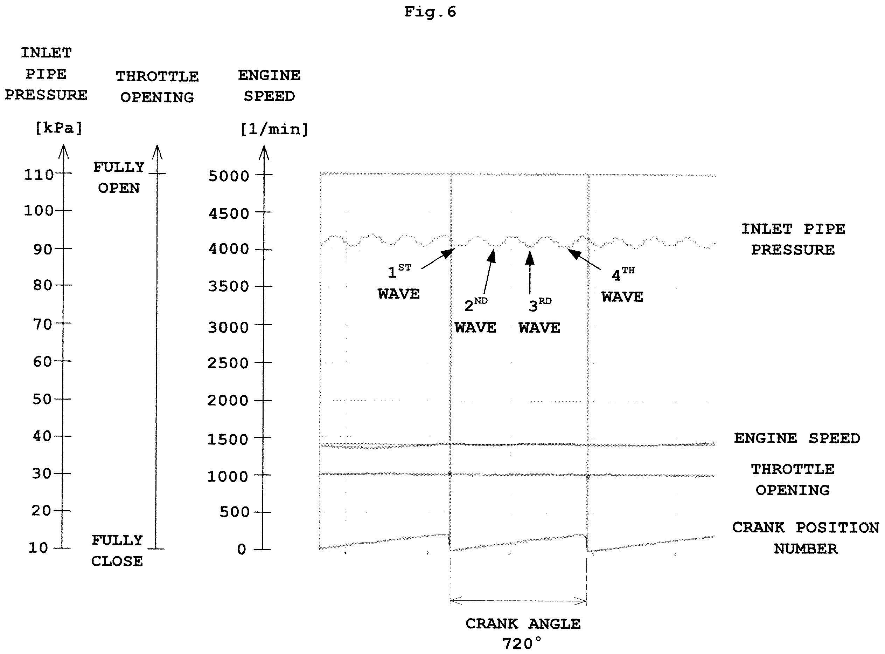

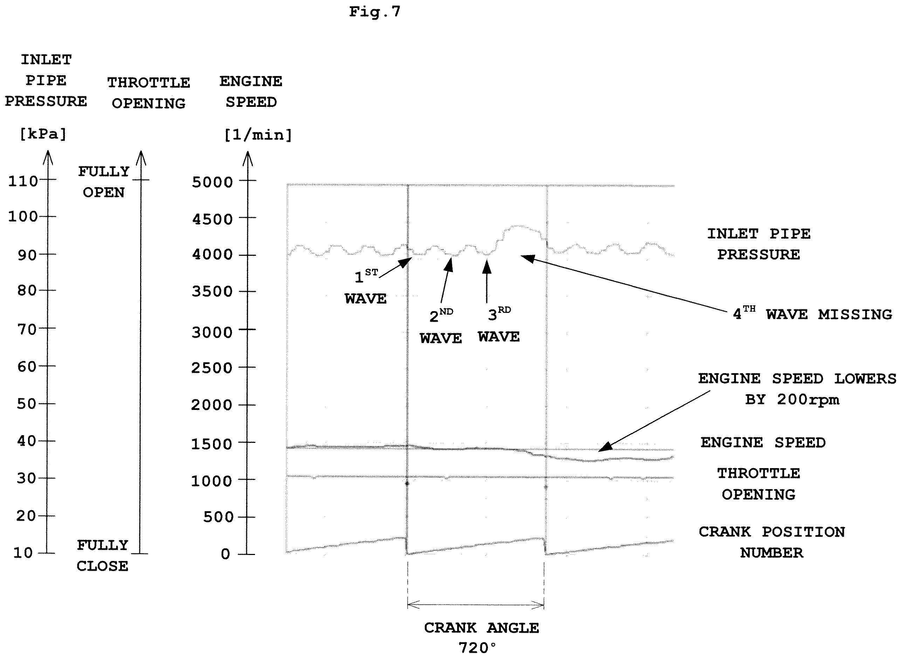

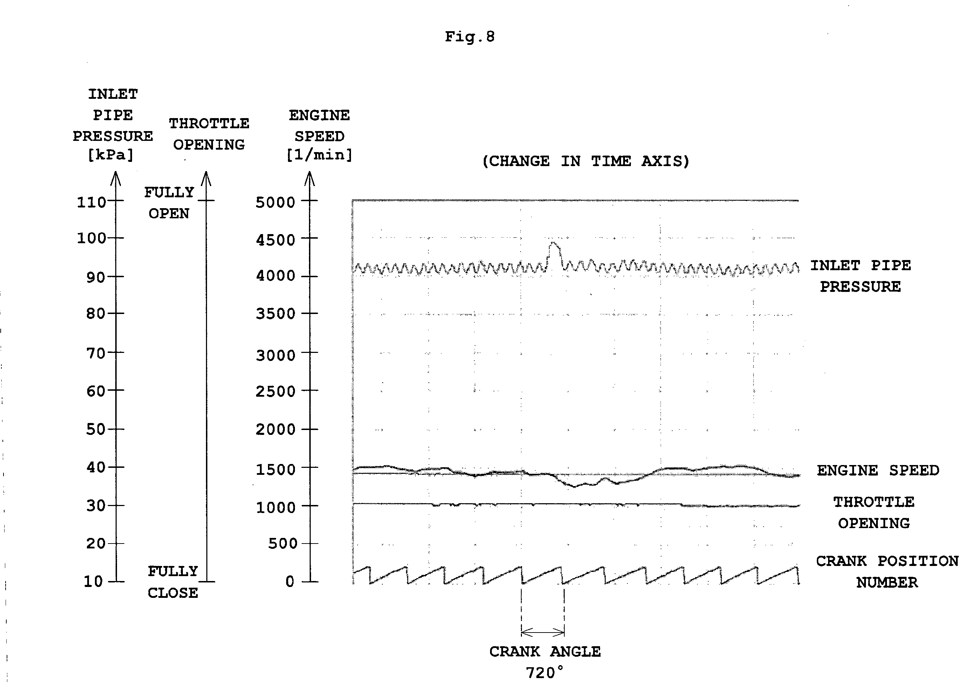

Next, examples of variations in inlet pipe pressure of the engine 13 will be described with reference to Figs. 6 - 8. Fig. 6 is a graph showing an example of variation in inlet pipe pressure at a normal time. Fig. 7 is a graph showing an example of variation in inlet pipe pressure at a time of misfire. Fig. 8 is a graph with a change in a time axis in the graph of Fig. 7.

As shown in Fig. 6, when the engine 13 is in normal operation, since this engine 13 is a four-cycle engine with four cylinders 27, explosions occur in the four combustion chambers 43 while the crankshaft 33 makes two rotations, which produce four waves (variations in the direction of negative pressure) in the inlet pipe pressure in a range of 720° crank angle. The fact that engine speed in this graph is almost constant also shows that the engine 13 is in normal operation.

On the other hand, when one of the four cylinders 27 of the engine 13 falls into combustion instability with misfire as shown in Fig. 7, only three waves are produced in the inlet pipe pressure in the range of 720° crank angle. The fact that engine speed in this graph lowers by about 200rpm after adjacent the missing fourth wave of the inlet pipe pressure also shows that the engine 13 is in a state of combustion instability due to misfire.

Fig. 8 is a graph with a change in the time axis in the graph of Fig. 7. This graph shows that an increase in the inlet pipe pressure can be determined by setting a threshold value appropriately.

Inventor has found that an instability of combustion in the engine 13 occurring in this way raises the rate of change in the rotating speed of the engine 13, which produces a phenomenon that a negative inlet pipe pressure in the region of the inlet pipe 29 downstream of the throttle 57 rises to approach atmospheric pressure. Inventor has acquired knowledge that combustion instability can be determined with high accuracy by using this phenomenon, without using the rate of change in the rotating speed of the engine 13, and based on detected variations in the inlet pipe pressure.

The determiner 77 noted hereinbefore determines whether or not a combustion instability has occurred based on a process value of inlet pipe pressure and a threshold value set beforehand. The process value used may, for example, be a value resulting from an averaging procedure, such as a moving average or a weighted average of inlet pipe pressures, or may be an inlet pipe pressure as it is. There are various modes of processing data, and a plurality of processing modes may be mixed for use.

Preferably, the above determination of combustion instability is not carried out at a start-up time or at a time of variation in the opening of the throttle 57 done by the rider since there can be a lowering of determining accuracy at such times. That is, an inlet pipe pressure cannot be measured stably until the opening of the throttle 57 or the rotating speed of the engine 13 settles within a certain range. In order to prevent an incorrect determination, therefore, the determiner 77 preferably withholds the determination of combustion instability until elapse of a predetermined time for stabilization of the inlet pipe pressure.

The control for early activation of the catalyst CA may be carried out at a start-up time. In this case, the engine controller 81 carries out control to increase the air volume from the inlet pipe 29 compared with an ordinary time, which retards ignition timing. And when instability of combustion is determined during the early activation control of the catalyst CA, the engine controller 81 carries out control to operate the throttle valve 59 of the throttle 57 in a closing direction, which advances ignition timing, thereby to stabilize the combustion. That is, the early activation control of the catalyst CA is inhibited or stopped. Inhibiting the early activation control of the catalyst CA here is not completely stopping the temperature increase action of exhaust gas for early activation, but lowering the temperature increase action of exhaust gas. When ignition timing is controlled according to the air volume, the air volume is decreased to advance the ignition timing accordingly. When the air volume is controlled according to the ignition timing, the ignition timing is advanced to decrease the air volume accordingly. When the air volume and the ignition timing are controlled in the interlocked manner as above, both the air volume and the ignition timing are controlled by controlling a target value of only one of them.

According to this embodiment, an unstable combustion in the engine 13 produces a phenomenon that a negative inlet pipe pressure in the inlet pipe 29 rises to approach atmospheric pressure. The determiner 77 can therefore determine with high accuracy that the combustion has become unstable based on the variation in the inlet pipe pressure detected by the manifold air pressure sensor 65.

The technique for determining combustion instability described above, since the volume from the throttle valve 59 of the throttle 57 to the inlet valves 49 is smaller than the displacement of the engine 13, can easily capture variations in the inlet pipe pressure accompanying combustion instability, and is well suited for the two-wheeled motor vehicle 1.

### <Embodiment 2>

Next, Embodiment 2 of this invention will be described with reference to the drawings.

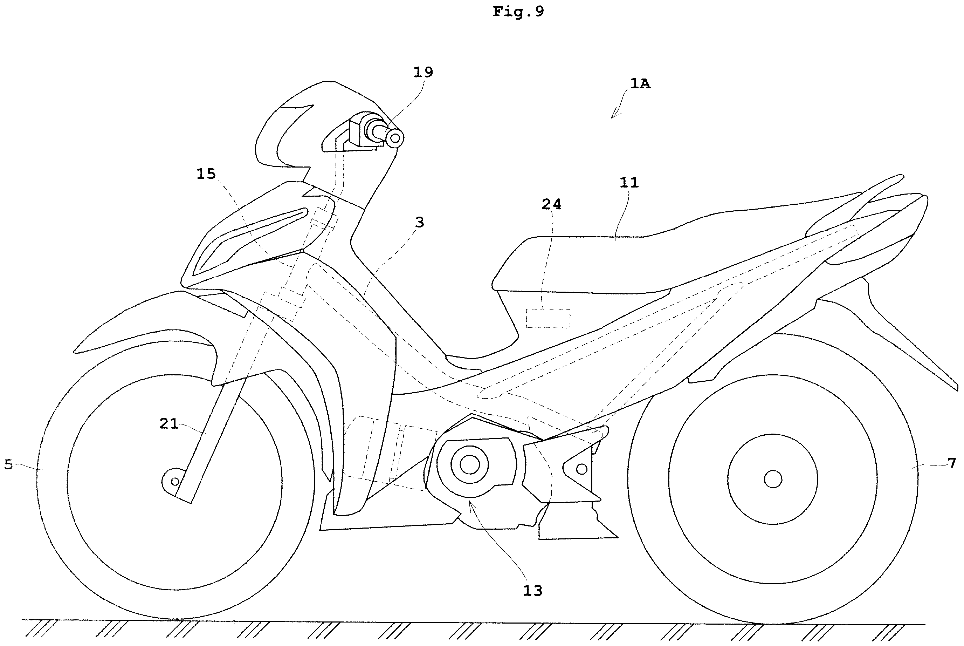

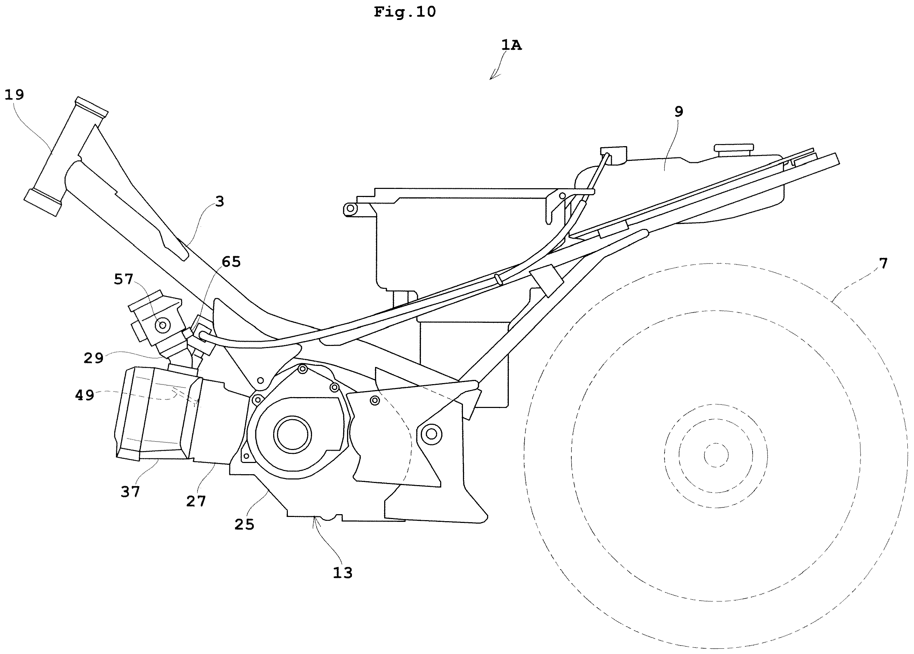

Fig. 9 is a side view showing an entire construction of a two-wheeled motor vehicle according to Embodiment 2. Fig. 10 is a left side view of a portion including an engine of the two-wheeled motor vehicle according to Embodiment 2.

A two-wheeled motor vehicle 1A according to this embodiment is a scooter type vehicle driven by a rider whose feet are placed on its floorboard. This two-wheeled motor vehicle 1A has a main frame 3, a front wheel 5, a rear wheel 7, a fuel tank 9, a seat 11, an engine 13, a head tube 15, a steering handle 19 and a front fork 21.

The engine 13 of this two-wheeled motor vehicle 1A has a cylinder 27 inclined forward and down to near horizontal. The engine 13 has a manifold air pressure sensor 65 attached directly to an inlet pipe 29 downstream of a throttle 57. The throttle 57 is disposed above the engine 13, and when seen from a side, is disposed forward of the rear end of the engine 13 and between the front end and rear end of the engine 13. The manifold air pressure sensor 65 may be attached to the inlet pipe 29 through a measurement pipe 61 as in Embodiment 1.

The two-wheeled motor vehicle 1A in this embodiment, with the inlet pipe pressure from the manifold air pressure sensor 65 and the crank angle applied to the ECU 24, can determine the stability of combustion of the engine 13 with high accuracy by using the technique described hereinbefore.

The engine 13 of the two-wheeled motor vehicle 1A in this embodiment is a single-cylinder engine whose displacement is about 115cc. The volume from the throttle 57 to the inlet valves 49 is about 50cc - 80cc. That is, the volume from the throttle 57 to the inlet valves 49 is smaller than the displacement. Also with the engine 13 of such small displacement, the same effect as in Embodiment 1 is produced.

### <Embodiment 3>

Next, Embodiment 3 of this invention will be described with reference to the drawings.

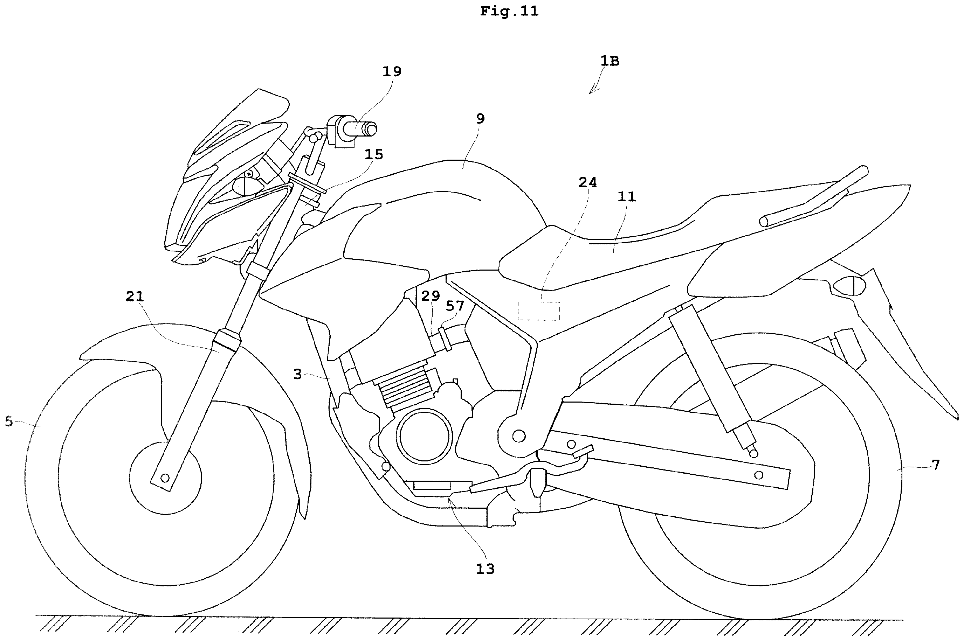

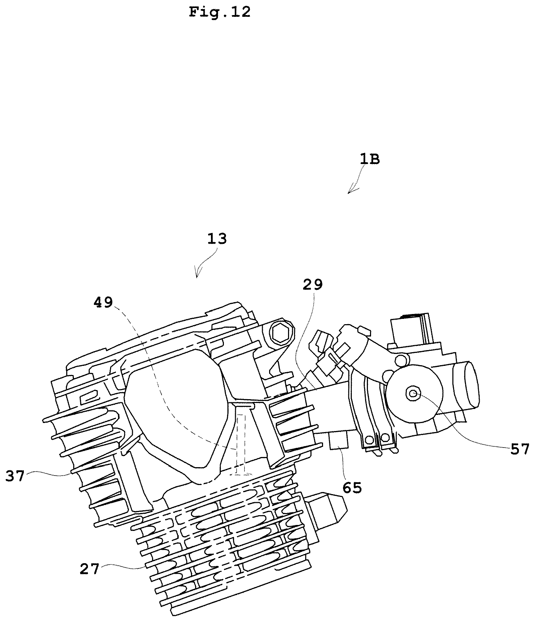

Fig. 11 is a side view showing an entire construction of a two-wheeled motor vehicle according to Embodiment 3. Fig. 12 is a left side view of a portion of an engine of the two-wheeled motor vehicle according to Embodiment 3.

A two-wheeled motor vehicle 1B in this embodiment is the same type as in Embodiment 1 described hereinbefore, but has a smaller displacement than in Embodiment 1. This two-wheeled motor vehicle 1B has a main frame 3, a front wheel 5, a rear wheel 7, a fuel tank 9, a seat 11, an engine 13, a head tube 15, a steering handle 19 and a front fork 21.

The engine 13 of this two-wheeled motor vehicle 1B has manifold air pressure sensors 65 attached directly to inlet pipes 29. Throttles 57 are disposed above a crank case 25 of the engine 1 3, and when seen from a side, are disposed forward of the rear end of the engine 13 and between the front end and rear end of the engine 13. A manifold air pressure sensor 65 may be attached to the inlet pipes 29 through measurement pipes 61 as in Embodiment 1.

The two-wheeled motor vehicle 1B in this embodiment, with the inlet pipe pressure from the manifold air pressure sensors 65 and the crank angle applied to the ECU 24 as in Embodiments 1 and 2 described hereinbefore, can determine the stability of combustion of the engine 13 with high accuracy by using the technique described hereinbefore.

The engine 13 of the two-wheeled motor vehicle 1B in this embodiment has a displacement of about 250cc. The volume from the throttles 57 to the inlet valves 49 is about 100cc - 150cc. That is, the volume from the throttles 57 to the inlet valves 49 is smaller than the displacement. Thus, also with the engine 13 having the displacement intermediate between those in Embodiment 1 and Embodiment 2, the same effect as in Embodiments 1 and 2 is produced.

This invention is not limited to the foregoing embodiments, but may be modified as follows:
(1) Each of Embodiments 1-3 has been described taking for example the two-wheeled motor vehicle 1, 1A or 1B having the engine 13 with four cylinders 27 or one cylinder 27. However, this invention is not limited to the two-wheeled motor vehicles 1, 1A and 1B having such engines 13. The invention is applicable also to a two-wheeled motor vehicle having an engine 13 with two cylinders 27 or three cylinders 27, for example. The cylinders 27 do not need to be in an in-line arrangement. This invention is applicable to engines 13 having combustion chambers 43, regardless of form in which the cylinders may be in a V-arrangement or a horizontally opposed arrangement.
(2) Embodiment 1 has been described taking for example the case of setting six predetermined ranges of the crank angle (360° crank angle) when calculating the moving average deviations of the inlet pipe pressure. However, since the number of times of variations in the inlet pipe pressure in one cycle is changeable with the number of cylinders 27 of the engine 1 3, it is preferable to set predetermined ranges of the crank angle according to the number of cylinders 27. This can stabilize the difference between the inlet pipe pressure at a time of combustion instability and the inlet pipe pressure at a time of combustion stability, thereby to be able to stabilize the determination of combustion instability.
(3) In foregoing Embodiments 1-3, combustion instability is determined based only on the inlet pipe pressure. However, in addition to the inlet pipe pressure, the pulse output of the rotating speed sensor may be detected as conventionally practiced, to detect combustion instability based on variations in the inlet pipe pressure and variations in the engine rotating speed. Consequently, combustion instability can be detected with high precision.
(4) In foregoing Embodiment 1, the 4-cylinder engine 13 has been described as producing explosions at equally-spaced intervals. However, this invention is applicable also to an engine 13 which produces explosions at unequally-spaced intervals.
(5) Each of Embodiments 1-3 has been described taking the two-wheeled motor vehicle 1, 1A or 1B driven by a straddling rider, as an example of saddle riding type vehicle. However, this invention is not limited to such type of saddle riding type vehicle. The invention is applicable also to the scooter type driven by a rider whose legs are kept close together, an ATV (All Terrain Vehicle) four-wheeled buggy) and a snowmobile, for example.

## Claims

1. A saddle riding type vehicle (1) driven by a straddling rider, comprising:
an engine (13) having a combustion chamber (43);
an inlet pipe (29) for introducing a fuel-air mixture into the combustion chamber (43);
an air throttle valve (59) attached to the inlet pipe (29) for adjusting quantity of the fuel-air mixture supplied to the combustion chamber (43);
an inlet pipe pressure detector (65) for detecting, as inlet pipe pressure, a manifold air pressure in the inlet pipe (29) downstream of the air throttle valve (59); **characterised by** a determiner (77) for determining that combustion in the engine (13) has become unstable based on the inlet pipe pressure rising from a negative pressure to approach atmospheric pressure.

2. A saddle riding type vehicle (1) according to claim 1, wherein the inlet pipe pressure detector (65) is attached to the inlet pipe (29) between the air throttle valve (59) and the combustion chamber (43).

3. A saddle riding type vehicle (1) according to claim 1 or 2, wherein the air throttle valve (59) is disposed above the engine (13).

4. A saddle riding type vehicle (1) according to any one of claims 1 to 3, wherein the air throttle valve (59) is disposed forward of a rear end of the engine (13) when seen from a side.

5. A saddle riding type vehicle (1) according to any one of claims 1 to 4, wherein the air throttle valve (59) is disposed between a front end and a rear end of the engine (13) when seen from a side.

6. A saddle riding type vehicle (1) according to any one of claims 1 to 5, wherein the inlet pipe (29) has a volume between the air throttle valve (59) and an inlet valve (49) of the combustion chamber (43), which volume is smaller than a displacement of the engine (13).

7. A saddle riding type vehicle (1) according to any one of claims 1 to 6, wherein:
the engine (13) includes a cylinder (27) inclined forward; and
the air throttle valve (59) is disposed rearward of the cylinder (27) and above a crank case (25) of the engine.

8. A saddle riding type vehicle (1) according to claim 6, wherein:
the engine (13) includes a plurality of cylinders (27);
the inlet pipe (29) is provided for each of the cylinders (27); and
each inlet pipe (29) has a volume between the air throttle valve (59) and the inlet valve (49) of the combustion chamber (43), which volume is smaller than the displacement of the engine (13).

9. A saddle riding type vehicle (1) according to claim 6, wherein:
the engine (13) includes one cylinder (27);
the inlet pipe (29) is provided for the cylinder (27); and
the inlet pipe (29) has a volume between the air throttle valve (59) and the inlet valve (49) of the combustion chamber (43), which volume is smaller than the displacement of the engine (13).

10. A saddle riding type vehicle (1) according to claim 8, comprising measurement pipes (61) each having one end thereof connected to each inlet pipe (29) and the other end connected to a collector (63);
wherein the inlet pipe pressure detector (65) is attached to the collector (63) of the measurement pipes (61).

11. A saddle riding type vehicle (1) according to any one of claims 1 to 10, wherein:
the engine (13) includes an exhaust pipe (31) for discharging exhaust gas from the combustion chamber (43);
the exhaust pipe (31) having a catalyst for purifying the exhaust gas; and
a controller (81) is provided for carrying out early activation control to cause an early activation of the catalyst (CA), and when the determiner (77) determines combustion instability, for inhibiting or discontinuing the early activation control.

12. A saddle riding type vehicle (1) according to claim 11, wherein the controller (81) is arranged to start the early activation control by increasing an air volume introduced from the inlet pipe (29) or by increasing an amount of retardation of ignition timing in the combustion chamber (43).

## Patentansprüche

1. Spreizsitz-Fahrzeug (1), das von einem Fahrer im Spreizsitz gefahren wird, wobei es umfasst:
einen Motor (13), der einen Brennraum (43) hat;
ein Einlassrohr (29) zum Einleiten eines Kraftstoff-Luft-Gemischs in den Brennraum (43);
ein Luft-Drosselventil (59), das an dem Einlassrohr (29) angebracht ist, um eine Menge des dem Brennraum (43) zugeführten Kraftstoff-Luft-Gemischs zu regulieren;
eine Einrichtung (65) zur Erfassung eines Einlassrohr-Drucks, mit der als ein Einlassrohr-Druck ein Verteiler-Luftdruck in dem Einlassrohr (29) stromab von dem Luft-Drosselventil (59) erfasst wird;
**gekennzeichnet durch**:
eine Feststelleinrichtung (77), mit der basierend darauf, dass der Einlassrohr-Druck von einem Unterdruck ausgehend ansteigt und sich atmosphärischem Druck nähert, festgestellt wird, dass Verbrennung in dem Motor (13) instabil geworden ist.

2. Spreizsitz-Fahrzeug (1) nach Anspruch 1, wobei die Einrichtung (65) zur Erfassung eines Einlassrohr-Drucks an dem Einlassrohr (29) zwischen dem Luft-Drosselventil (59) und dem Brennraum (43) angebracht ist.

3. Spreizsitz-Fahrzeug (1) nach Anspruch 1 oder 2, wobei das Luft-Drosselventil (59) oberhalb des Motors (13) angeordnet ist.

4. Spreizsitz-Fahrzeug (1) nach einem der Ansprüche 1 bis 3, wobei das Luft-Drosselventil (59), von der Seite gesehen, vor einem hinteren Ende des Motors (13) angeordnet ist.

5. Spreizsitz-Fahrzeug (1) nach einem der Ansprüche 1 bis 4, wobei das Luft-Drosselventil (59), von der Seite gesehen, zwischen einem vorderen Ende und einem hinteren Ende des Motors (13) angeordnet ist.

6. Spreizsitz-Fahrzeug (1) nach einem der Ansprüche 1 bis 5, wobei das Einlassrohr (29) ein Volumen zwischen dem Luft-Drosselventil (59) und einem Einlassventil (49) des Brennraums (43) hat und dieses Volumen kleiner ist als ein Hubraum des Motors (13).

7. Spreizsitz-Fahrzeug (1) nach einem der Ansprüche 1 bis 6, wobei:
der Motor (13) einen Zylinder (27) enthält, der nach vorn geneigt ist; und
das Luft-Drosselventil (59) hinter dem Zylinder (27) und oberhalb eines Kurbelgehäuses (25) des Motors angeordnet ist.

8. Spreizsitz-Fahrzeug (1) nach Anspruch 6, wobei:
der Motor (13) eine Vielzahl von Zylindern (27) enthält;
das Einlassrohr (29) für jeden der Zylinder (27) vorhanden ist; und
jedes Einlassrohr (29) ein Volumen zwischen dem Luft-Drosselventil (59) und dem Einlassventil (49) des Brennraums (43) hat und dieses Volumen kleiner ist als der Hubraum des Motors (13).

9. Spreizsitz-Fahrzeug (1) nach Anspruch 6, wobei:
der Motor (13) einen Zylinder (27) enthält;
das Einlassrohr (29) für den Zylinder (27) vorhanden ist; und
das Einlassrohr (29) ein Volumen zwischen dem Luft-Drosselventil (59) und dem Einlassventil (49) des Brennraums (43) hat und dieses Volumen kleiner ist als der Hubraum des Motors (13).

10. Spreizsitz-Fahrzeug (1) nach Anspruch 8, das Messrohre (61) umfasst, deren eines Ende jeweils mit jedem Einlassrohr (29) verbunden ist und deren anderes Ende mit einem Sammler (63) verbunden ist;
wobei die Einrichtung (65) zur Erfassung eines Einlassrohr-Drucks an dem Sammler (63) der Messrohre (61) angebracht ist.

11. Spreizsitz-Fahrzeug (1) nach einem der Ansprüche 1 bis 10, wobei:
der Motor (13) ein Abgasrohr (31) zum Ausstoßen von Abgas aus dem Brennraum (43) enthält;
das Abgasrohr (31) einen Katalysator zum Reinigen des Abgases aufweist; und
eine Steuereinrichtung (81) vorhanden ist, die Steuerung für frühe Aktivierung ausführt, um eine frühe Aktivierung des Katalysators (CA) zu bewirken, und, wenn die Feststelleinrichtung (77) Instabilität der Verbrennung feststellt, die Steuerung für frühe Aktivierung unterdrückt oder unterbricht.

12. Spreizsitz-Fahrzeug (1) nach Anspruch 11, wobei die Steuereinrichtung (81) so eingerichtet ist, dass sie die Steuerung für frühe Aktivierung beginnt, indem sie ein über das Einlassrohr (29) eingeleitetes Luftvolumen vergrößert oder indem sie ein Maß der Verzögerung des Zündzeitpunktes in dem Brennraum (43) vergrößert.

## Revendications

1. Véhicule de type selle (1) guidé par un cavalier chevauchant, comprenant:
un moteur (13) ayant une chambre de combustion (43);
un tuyau d'entrée (29) pour introduire un mélange carburant-air dans la chambre de combustion (43);
une soupape d' étranglement d'air (59) fixée au tuyau d'entrée (29) pour ajuster la quantité du mélange air-carburant fourni à la chambre de combustion (43);
un détecteur de pression de tuyau d'entrée (65) pour détecter, en tant que pression de tuyau d'entrée, une pression d'air de collecteur dans le tuyau d'entrée (29) en aval de la soupape d'étranglement d'air (59); et
un déterminateur (77) pour déterminer que la combustion dans le moteur (13) est devenue instable sur la base de la pression du tuyau d'entrée augmentant d'une pression négative pour approcher la pression atmosphérique.

2. Véhicule de type à selle (1) selon la revendication 1, dans lequel le détecteur de pression de tuyau d'entrée (65) est fixé au tuyau d'entrée (29) entre la soupape d' étranglement d'air (59) et la chambre de combustion (43).

3. Véhicule du type à selle (1) selon la revendication 1 ou 2, dans lequel la soupape d' étranglement d'air (59) est disposée au-dessus du moteur (13).

4. Véhicule du type à selle (1) selon l'une quelconque des revendications 1 à 3, dans lequel la soupape d'étranglement d'air (59) est disposée en avant d'une extrémité arrière du moteur (13) lorsque vu d'un côté.

5. Véhicule du type à selle (1) selon l'une quelconque des revendications 1 à 4, dans lequel la soupape d'étranglement d'air (59) est disposée entre une extrémité avant et une extrémité arrière du moteur (13) lorsque vu d'un côté.

6. Véhicule de type selle (1) selon l'une quelconque des revendications 1 à 5, dans lequel le tuyau d'entrée (29) présente un volume entre la soupape d'étranglement d'air (59) et une soupape d'admission (49) de la chambre de combustion (43), lequel volume est inférieur à un déplacement du moteur (13).

7. Véhicule de type selle (1) selon l'une quelconque des revendications 1 à 6, dans lequel:
le moteur (13) comprend un cylindre (27) incliné vers l'avant; et
la soupape d'étranglement d'air (59) est disposée à l'arrière du cylindre (27) et au-dessus du carter (25) du moteur.

8. Véhicule de type selle (1) selon la revendication 6, dans lequel:
le moteur (13) comprend une pluralité de cylindres (27);
le tuyau d'entrée (29) est prévu pour chacun des cylindres (27); et
chaque tuyau d'entrée (29) a un volume entre la soupape d'étranglement d'air (59) et la soupape d'admission (49) de la chambre de combustion (43), lequel volume est inférieur au déplacement du moteur (13).

9. Véhicule de type selle (1) selon la revendication 6, dans lequel:
le moteur (13) comprend un cylindre (27);
le tuyau d'entrée (29) est prévu pour le cylindre (27); et
le tuyau d'entrée (29) a un volume entre la soupape d'étranglement d'air (59) et la soupape d'admission (49) de la chambre de combustion (43), lequel volume est inférieur au déplacement du moteur (13).

10. Véhicule du type à selle (1) selon la revendication 8, comprenant des conduites de mesure (61) chacune ayant une extrémité reliée à chaque conduite d'entrée (29) et l'autre extrémité reliée à un collecteur (63);
dans lequel le détecteur de pression de tuyau d'entrée (65) est fixé au collecteur (63) des tuyaux de mesure (61).

11. Véhicule de type selle (1) selon l'une quelconque des revendications 1 à 10, dans lequel:
le moteur (13) comprend un tuyau d'échappement (31) pour évacuer les gaz d'échappement de la chambre de combustion (43);
le tuyau d'échappement (31) ayant un catalyseur pour purifier les gaz d'échappement; et
un contrôleur (81) est prévu pour effectuer un contrôle d'activation précoce pour provoquer une activation précoce du catalyseur (CA), et lorsque le déterminateur (77) détermine une instabilité de combustion, pour inhiber ou arrêter le contrôle d'activation précoce.

12. Véhicule de type selle (1) selon la revendication 11, dans lequel le contrôleur (81) est agencé pour démarrer le contrôle d'activation précoce en augmentant un volume d'air introduit depuis le conduit d'entrée (29) ou en augmentant une quantité de retard de l'allumage dans la chambre de combustion (43).
